# EUROPÄISCHE PATENTSCHRIFT

(11) **EP 1 694 971 B1**
(45) Veröffentlichungstag und Bekanntmachung des Hinweises auf die Patenterteilung: **05.03.2008**
(21) Anmeldenummer: 04789550.3
(22) Anmeldetag: 21.10.2004
(51) Int. Cl.: F16B 7/14, A63C 11/22

(54) **KLEMMVORRICHTUNG FÜR TELESKOPARTIG INEINANDER GESCHOBENE ROHRE**
CLAMP DEVICE FOR TELESCOPIC TUBES INSERTED ONE IN THE OTHER
DISPOSITIF DE SERRAGE POUR TUBES INSERES L'UN DANS L'AUTRE DE FACON TELESCOPIQUE

(30) Priorität: 15.12.2003 AT 8912003 U
(43) Veröffentlichungstag der Anmeldung: 30.08.2006
(73) Patentinhaber: Komperdell Sportartikel Gesellschaft m.b.H., 5310 Mondsee (AT)
(72) Erfinder: ROISER, Thomas, A-5310 Mondsee (AT)
(74) Vertreter: Hehenberger, Reinhard
(86) Internationale Anmeldenummer: PCT/AT2004/000360
(87) Internationale Veröffentlichungsnummer: WO 2005/057025

(56) Entgegenhaltungen:
- EP-A- 0 314 357
- CH-A- 267 177
- DE-A- 19 514 752
- US-A- 4 134 703
- US-A- 5 263 802

## Beschreibung

Die Erfindung betrifft eine Klemmvorrichtung für teleskopartig ineinander geschobene Rohre, insbesondere, von Sportstöcken, mit einem radial aufweitbaren Klemmteil mit den Merkmalen des einleitenden Teils von Anspruch 1.

Derartige Klemmvorrichtungen dienen dazu, die Lage teleskopartig ineinander geschobener Rohre relativ zueinander zu fixieren.

Derartige Vorrichtungen sind beispielsweise bei längenveränderbaren Sportstöcken, wie Skistöcken, Wanderstöcken u.dgl., bekannt. Beispielhaft wird auf die AT 397 355 B und die AT 404 324 B verwiesen.

Die bekannten Klemmvorrichtungen besitzen am inneren Rohr unverdrehbar festgelegt einen Gewindestab. Über diesen Gewindestab ist ein Klemmteil gesteckt. Der Klemmteil wirkt mit einem auf den Gewindestab geschraubten Konus ("Spreizkörper") zusammen. Der Konus liegt an der Innenseite des äußeren Rohres, in welches das innere Rohr teleskopartig eingeführt ist, an, so dass beim Verdrehen der Rohre zueinander der Konus je nach der Drehrichtung, in Richtung auf den spreizbaren Klemmteil hin oder von diesem weg bewegt wird. Durch ein entsprechendes Verdrehen kann der Klemmteil gespreizt und damit die Lage der Rohre zueinander fixiert werden. Wenn die Lage verändert werden soll, wird in entgegengesetzter Richtung gedreht, um die Klemmvorrichtung zu lösen, und eine neue Lage kann eingestellt werden.

Nachteilig bei diesen bekannten Ausführungsformen ist es, dass der Spreizkörper nur vor einer Seite her auf den Klemmteil einwirkt, so dass eine zum Sichern der Relativlage der beiden, z.B. Stockteile, bildenden Rohre zueinander eine genügende Klemmwirkung nur mit relativ großem Kraftaufwand erreicht werden kann.

Eine Klemmvorrichtung der eingangs genannten Gattung ist aus der EP 0 314 357 A bekannt.

Der Erfindung liegt die Aufgabe zu Grunde, eine mit einem spreizbaren Klemmteil arbeitende Klemmvorrichtung für ineinander geschobene Rohre, insbesondere von Stöcken und ähnlichen, vorzusehen, mit der die erforderliche Klemmwirkung mit geringerem Kraftaufwand als bisher erreicht werden kann.

Gelöst wird diese Aufgabe mit einer Klemmvorrichtung, welche die Merkmale von Anspruch 1 aufweist.

Vorteilhafte und bevorzugte Ausgestaltungen der erfindungsgemäßen Klemmvorrichtung sind Gegenstand der Unteransprüche.

Dadurch dass bei der erfindungsgemäßen Vorrichtung der die Klemmung durch Kraftschluss zwischen den teleskopartig ineinander geschobenen Rohren bewirkende, spreizbare Klemmteil von beiden Seiten her mit je einem Konus (Spreizkörper) beaufschlagt wird, ergibt sich eine erheblich verbesserte Klemmwirkung.

Im Rahmen der Erfindung ist vorgesehen, dass die beiden Spreizkörper, die mit dem Klemmteil zusammenwirken, auf Abschnitte des Gewindestabes gesteckt und geschraubt sind, die gegenläufige Gewindegänge (ein Linksgewinde und ein Rechtsgewinde) besitzen. So wird schon bei geringer Drehbewegung eine hinreichend große Axialbewegung der beiden konischen Spreizkörper relativ zum Klemmteil erreicht. Bei dieser Ausführungsform wird schon bei geringem Verdrehen die nötige Klemmkraft aufgebracht, um die beiden Rohre, z.B. Stockteile, in ihrer gewählten Relativlage (entsprechend der gewünschten Länge des Stockes) zueinander zu sichern.

Weitere Einzelheiten, Merkmale und Vorteile der erfindungsgemäßen Klemmvorrichtung ergeben sich aus der nachstehenden Beschreibung bevorzugter Ausführungsbeispiele.

Es zeigt:

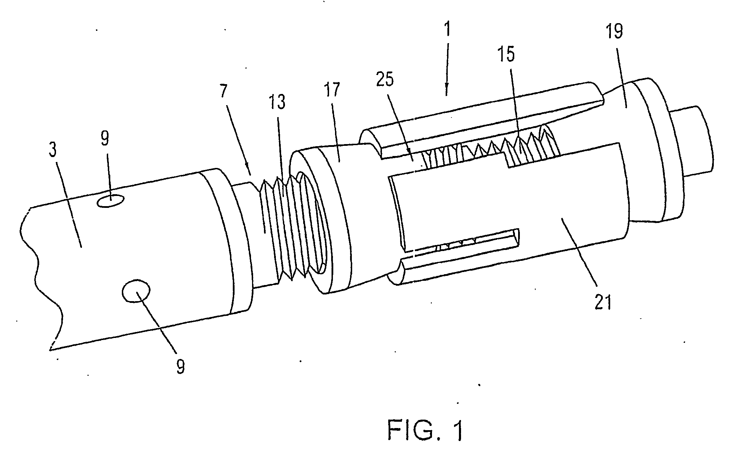

Fig. 1 in perspektivischer Ansicht eine Klemmvorrichtung gemäß der Erfindung ohne äußeres Rohr;

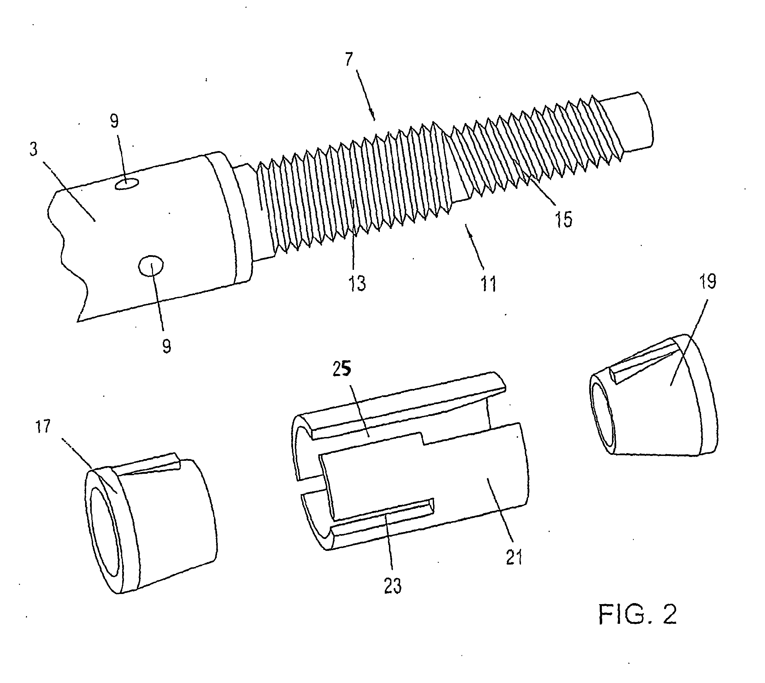

Fig. 2 die Einzelteile der erfindungsgemäßen Klemmvorrichtung ebenfalls ohne äußeres Rohr; und

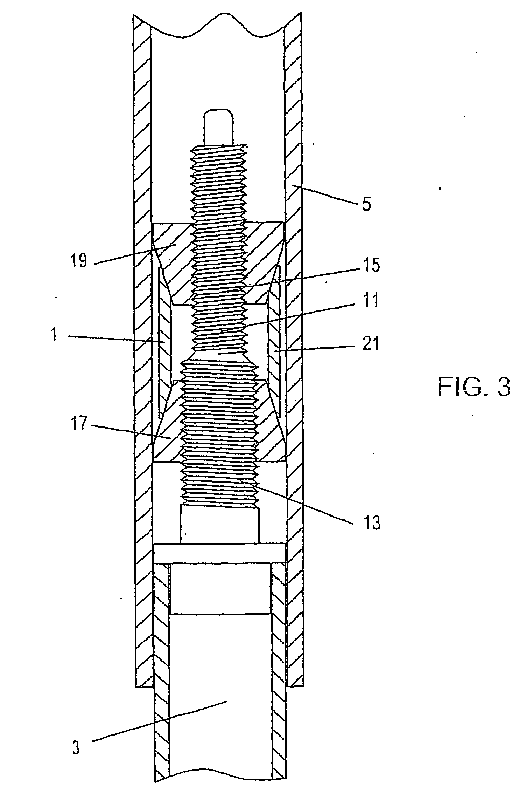

Fig. 3 im Axialschnitt die Klemmvorrichtung im Überlappungsbereich zweier Rohre.

Die erfindungsgemäße Klemmvorrichtung 1 ist an dem Ende eines Rohres 3 (oder Stabes) angeordnet, das in ein äußeres Rohr 5, vorzugsweise mit geringem Spiel, eingeschoben wird. Durch Verschieben der Rohre 3 und 5 zueinander kann die Relativlage der Rohre 3, 5 zueinander verändert werden, und zum Beispiel die Länge eines Sportstockes (Schistock, Wanderstock und ähnliches) auf den jeweils gewünschten Wert eingestellt werden.

Im Einzelnen umfasst die Klemmvorrichtung 1 einen an dem Rohr 3 durch Kerbungen 9 festgelegten Gewindeteil 7, dessen über das Rohr 3 überstehender Gewindestab 11 zwei Abschnitte 13 und 15 mit gegenläufigen Gewinden aufweist. Dabei ist das Gewinde des Abschnittes 13, der dem Rohr 3 benachbart ist, mit größerem Durchmesser ausgebildet, als das Gewinde am Gewindeabschnitt 15 im Bereich des freien Endes des Gewindestabes 11.

Die Klemmvorrichtung 1 besitzt zwei konische Spreizkörper 17 und 19. Der Spreizkörper 17 besitzt ein Innengewinde, das dem dickeren Gewinde 13 an der Wurzel des Gewindestabes 11 entspricht. Der Spreizkörper 19 hat ein Innengewinde; das dem dünneren Gewinde 15 am freien Ende des Gewindestabes 11 entspricht.

Zwischen den Spreizkörpern 17 und 19 ist ein radial spreizbarer (aufweitbarer) Klemmteil 21 vorgesehen, in den die konischen Spreizkörper 17 und 19 mit ihren durchmesserkleineren Enden eingreifen. Der Klemmteil 21 ist ein Zylinderrohr, das von beiden Seiten her, etwa bis zur Längsmitte führende Einschnitte 23 besitzt.'Die Einschnitte 23 an einem Ende des Klemmteils 21 sind bevorzugt gegenüber den Einschnitten 23 am anderen Ende des Klemmteils 21, z.B. um 90', versetzt angeordnet. Zusätzlich ist das den Klemmteil 21 bildende Zylinderrohr durchgehend geschlitzt (Schlitz 25). So kann sich der Klemmteil 21 unter der Wirkung der Spreizkörper 17 und 19 radial aufweiten.

Die Klemmvorrichtung 1 greift in das Innere eines über das mit der Klemmvorrichtung 1 bestückte Rohr 3 geschobenes, äußeres Rohr 5 ein, wobei die durchmessergrößeren Enden der Spreizkörper 17 und 19 so bemessen sind, dass sie mit Reibschluss an der Innenfläche des äußeren Rohres 5 anliegen. Zusätzlich können die Spreizkörper 17 und 19 an ihren dickeren Enden (Enden mit größerem Durchmesser) mit reibungserhöhenden Mitteln ausgestattet sein. Diese können beispielsweise Rippen, Zähne oder auch z.B. ringförmige Einsätze aus einem (gummielastischen) Werkstoff, der gegenüber dem Werkstoff des äußeren Rohres 5 einen hohen Reibungskoeffizienten besitzt, sein.

Wenn das Rohr 3, an dem die Klemmvorrichtung 1 befestigt ist, relativ zu dem anderen Rohr 5 verdreht wird, werden bei entsprechender Drehrichtung die Spreizkörper 17 und 19 einander angenähert und dringen weiter in die Enden des Klemmteiles 21 ein und weiten diesen über seine Länge im wesentlichen gleichmäßig radial auf, bis dieser so fest an der Innenfläche des äußeren Rohres 5 anliegt, dass dieses relativ zu dem anderen Rohr 3 nicht mehr verschoben werden kann.

Sämtliche Bestandteile der erfindungsgemäßen Klemmvorrichtung 1 können aus Kunststoff gefertigt sein, wobei für die Spreizkörper 17 und 19 ein Kunststoff bevorzugt ist, der auf der Innenfläche des Rohres (meistens ein Metallrohr) eine hinreichend große Reibung besitzt.

Zusammenfassend kann ein Ausführungsbeispiel der Erfindung wie folgt erläutert werden:

Um die Lage von teleskopartig ineinander schiebbaren Rohren 3 und 5 von Sportstöcken, insbesondere Schistöcken, relativ zueinander zu fixieren, ist innerhalb der Rohre 3 und 5 eine Klemmvorrichtung 1 vorgesehen. Die Klemmvorrichtung 1 besitzt einen Klemmteil 21 und Spreizkörper 17 und 19, die den Enden des Klemmteils 21 zugeordnet sind. Die Spreizkörper 17 und 19 sind auf einen Gewindestab 11 mit gegenläufigen Gewindeabschnitten 13 und 15 geschraubt. Durch Relativverdrehen der Rohre 3 und 5 zueinander dringen die Spreizkörper 17 und 19, bei entsprechend gewählter Drehrichtung, von beiden Enden des Klemmteils 21 her in den Klemmteil 21 ein und weiten diesen über seine gesamte Länge im wesentlichen gleichmäßig radial auf, so dass er unter Kraftschluss an die Innenfläche des äußeren Rohres 5 anliegt und so eine einmal eingestellte Länge des Stockes fixiert.

## Patentansprüche

1. Klemmvorrichtung (1) für teleskopartig ineinander geschobene Rohre (3, 5), insbesondere von Sportstöcken, mit einem radial aufweitbaren Klemmteil (21), der ein Hohlzylinder ist, der einen durchgehenden Längsschlitz (25) aufweist, wobei beiden Enden des Klemmteils (21) konische Spreizkörper (17, 19) zugeordnet sind, **dadurch gekennzeichnet, dass** beide Spreizkörper (17, 19) relativ zu dem Klemmteil (21) verstellbar sind, dass die Spreizkörper (17, 19) auf Gewindeabschnitte (13, 15) eines Gewindestabes (11) mit gegenläufigen Gewinden geschraubt sind, und dass ein den Gewindestab (11) aufweisender Gewindeteil (7) an dem inneren Rohr (3) der teleskopartig ineinander geschobenen Rohre (3, 5) befestigt ist.

2. Klemmvorrichtung nach Anspruch 1, **dadurch gekennzeichnet, dass** der Gewindeabschnitt (13), der dem inneren Rohr (3) benachbart ist, einen größeren Durchmesser aufweist, als der vom inneren Rohr (3) entfernt liegende Gewindeabschnitt (15).

3. Klemmvorrichtung nach Anspruch 1 oder 2, **dadurch gekennzeichnet, dass** der den Klemmteil (21) bildende Hohlzylinder von seinen beiden Enden ausgehende Einschnitte (23) aufweist.

4. Klemmvorrichtung nach Anspruch 3, **dadurch gekennzeichnet, dass** an jedem Ende des Hohlzylinders zwei einander diametral gegenüberliegende Einschnitte (23) vorgesehen sind.

5. Klemmvorrichtung nach Anspruch 3 oder 4, **dadurch gekennzeichnet, dass** die Einschnitte (23) an den Enden des Hohlzylinders zueinander um 90 Grad versetzt sind.

6. Klemmvorrichtung nach einem der Ansprüche 1 bis 5, **dadurch gekennzeichnet, dass** die Spreizkörper (17, 19) mit ihren durchmesserjüngeren Enden in den Klemmteil (21) eingreifen.

7. Klemmvorrichtung nach einem der Ansprüche 1 bis 6, **dadurch gekennzeichnet, dass** die Spreizkörper (17, 19) an ihren durchmessergrößeren Enden relativ zum Werkstoff des äußeren Rohres (5) reibungserhöhend ausgebildet sind.

## Claims

1. Clamping device (1) for telescoping tubes (3, 5), especially of poles or staffs used in sports, with a radially expandable clamping part (21) which is a hollow cylinder which has a continuous lengthwise slot (25), conical expansion bodies (17, 19) being assigned to the two ends of the clamping part (21), **characterized in that** the two expansion bodies (17, 19) can be moved relative to the clamping part (21), that the expansion bodies (17, 19) are screwed onto threaded sections (13, 15) of the threaded rod (11) with opposing threads, and that a threaded part (7) which has the threaded rod (11) is attached to the inner tube (3) of the telescoping tubes (3, 5).

2. Clamping device as claimed in claim 1, **characterized in that** the threaded section (13) which is adjacent to the inner tube (3) has a greater diameter than the threaded section (15) which is remote from the inner tube (3).

3. Clamping device as claimed in claim 1 or 2, **characterized in that** the hollow cylinder which forms the clamping part (21) has incisions (23) which proceed from its two ends.

4. Clamping device as claimed in claim 3, **characterized in that** there are two incisions (23) which are diametrically opposite one another on each end of the hollow cylinder.

5. Clamping device as claimed in claim 3 or 4, **characterized in that** the incisions (23) are offset by 90 degrees to one another on the ends of the hollow cylinder.

6. Clamping device as claimed in one of claims 1 to 5, **characterized in that** the expansion bodies (17, 19) with their ends of smaller diamter engage the clamping part (21).

7. Clamping device as claimed in one of claims 1 to 6, **characterized in that** the expansion bodies (17, 19) on their ends with the greater diameter are made to increase friction relative to the material of the outer tube (5).

## Revendications

1. Dispositif de serrage (1) pour des tubes (3, 5) du genre télescopiques emboîtés les uns dans les autres, en particulier des cannes sportives, avec un élément de serrage (21) pouvant être radialement élargi, constitué d'un cylindre creux comportant une fente longitudinale continue (25), des écarteurs coniques (17, 19) étant disposés aux deux extrémités de l'élément de serrage (21), **caractérisé en ce que** les deux écarteurs (17, 19) peuvent être réglés par rapport à l'élément de serrage (21), **en ce que** les écarteurs (17, 19) sont vissés sur des segments filetés (13, 15) d'une tige filetée (11) avec des filetages contrarotatifs, et **en ce que** l'élément fileté (7) comportant la tige filetée (11) est fixé dans le tube intérieur (3) des tubes du genre télescopiques emboîtés les uns dans les autres (3, 5).

2. Dispositif de serrage selon la revendication 1, **caractérisé en ce que** le segment fileté (13), qui est adjacent au tube intérieur (3), présente un diamètre plus grand que le segment fileté (15) qui est situé à l'extrémité opposée au tube intérieur (3).

3. Dispositif de serrage selon les revendications 1 ou 2, **caractérisé en ce que** le cylindre creux formant l'élément de serrage (21) comporte des entailles (23) partant des deux côtés.

4. Dispositif de serrage selon la revendication 3, **caractérisé en ce que** deux entailles (23) diamétralement opposées sont prévues de chaque côté du cylindre creux.

5. Dispositif de serrage selon les revendications 3 ou 4, **caractérisé en ce que** les entailles (23) situées aux extrémités du cylindre creux sont décalées l'une par rapport à l'autre de 90 degrés.

6. Dispositif de serrage selon l'une des revendications 1 à 5, **caractérisé en ce que** les écarteurs (17, 19) s'engagent dans l'élément de serrage (21) par leurs extrémités ayant le plus petit diamètre.

7. Dispositif de serrage selon l'une des revendications 1 à 6, **caractérisé en ce qu'**à leurs extrémités ayant le diamètre le plus grand, les écarteurs (17, 19) sont conçus de façon à augmenter la friction par rapport au matériau du tube extérieur (5).
